(19) Europäisches Patentamt
European Patent Office
Office européen des brevets

(11) **EP 1 826 530 B1**

(12) **EUROPÄISCHE PATENTSCHRIFT**

(45) Veröffentlichungstag und Bekanntmachung des Hinweises auf die Patenterteilung:
**27.08.2008 Patentblatt 2008/35**

(51) Int Cl.:
**G01B 21/12** *(2006.01)* **B60C 23/06** *(2006.01)*

(21) Anmeldenummer: **07001262.0**

(22) Anmeldetag: **20.01.2007**

(54) **Verfahren und Vorrichtung zur Umfangsermittlung eines Rades**

Method and device for determining the circumference of a wheel

Procédé et dispositif destinés à la détection de la dimension d'une roue

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.02.2006 DE 102006008623**
**28.04.2006 DE 102006020490**

(43) Veröffentlichungstag der Anmeldung:
**29.08.2007 Patentblatt 2007/35**

(73) Patentinhaber: **Volkswagen Aktiengesellschaft 38436 Wolfsburg (DE)**

(72) Erfinder:
• **Rohlfs, Michael**
**38531 Rötgesbüttel (DE)**
• **Brenneke, Christian**
**30823 Garbsen (DE)**
• **Stüker, Dirk**
**30900 Wedemark (DE)**

(56) Entgegenhaltungen:
EP-A2- 0 979 763 EP-A2- 1 155 879
DE-A1- 3 236 520 DE-A1- 10 306 498

**Beschreibung**

Die Erfindung betrifft eine Verfahren und eine Vorrichtung zur Umfangsermittlung von Fahrzeugrädern.

Die DE 103 06 498 beschreibt ein Verfahren zur Bestimmung der Abnutzung an einer Lauffläche eines Fahrzeug-Rades, wobei wiederholt eine bei fahrendem Fahrzeug stattfindende Umdrehungsbewegung des Rades und eine dabei tatsächlich stattfindende Fahrzeugbewegung über einem Untergrund ausgewertet und kombiniert werden.

Über die genaue Kenntnis des Umfangs eines Fahrzeugrades kann der zurückgelegte Weg des Fahrzeugs genau ermittelt werden. Es gibt verschiedene Vorrichtungen im Fahrzeug, die von der Kenntnis des aktuellen Radumfangs profitieren. Zu diesen Vorrichtungen zählen beispielsweise eine Kilometer- und Geschwindigkeitsanzeige, eine Positionsbestimmung (Navigationssystem, insbesondere wenn kein hinreichend genaues Empfangssignal vorhanden ist) und eine Reifendruckkontrolle. Auch Fahrerassistenzsysteme können mit genauen Radumfängen genauere Ergebnisse liefern, insbesondere wenn eine genaue Fahrzeugpositionsbestimmung erforderlich ist. Zu diesen Fahrerassistenzsystemen gehört beispielsweise eine Einparkhilfe, welche eine Parklücke genau zu vermessen hat oder die entlang einer Sollbahn in eine Parklücke einfährt.

In der vorliegenden Erfindung wird unter einem Umfang eines Rades der Abrollumfang dieses Rades verstanden, d.h. die Wegstrecke, welche je Umdrehung des Rades zurückgelegt wird. Die Radabrollumfänge der Räder eines Fahrzeugs sind nicht konstant. Sie können sich vielmehr beispielsweise aus folgenden Gründen verändern:

- Luftdruckschwankungen
- Fertigungstoleranzen der Räder
- Temperaturänderungen
- Verschleiß
- Radwechsel

Daher ist die Aufgabe der vorliegenden Erfindung, den Umfang eines Rades eines Fahrzeugs genau zu ermitteln.

Erfindungsgemäß wird diese Aufgabe durch ein Verfahren zur Umfangsermittlung eines Rades nach Anspruch 1 sowie eine Vorrichtung zur Umfangsermittlung eines Rades eines Fahrzeugs nach Anspruch 10 gelöst. Die abhängigen Ansprüche definieren bevorzugte und vorteilhafte Ausführungsformen der Erfindung.

Im Rahmen der vorliegenden Erfindung wird der Umfang eines Rades eines Fahrzeugs mit mindestens zwei Rädern in Abhängigkeit von folgenden Messgrößen oder Parametern ermittelt:

- Gierrate $\dot{\Psi}$
- erste Drehgeschwindigkeit $DG_1$ eines ersten Rades,

z.B. hinten links
- zweite Drehgeschwindigkeit $DG_2$ eines zweiten Rades, z.B. hinten rechts
- Spurweite s zwischen dem ersten und dem zweiten Rad

Dabei wird unter der Gierrate eine Winkelgeschwindigkeit einer Drehung des Fahrzeugs um seine Hochachse bzw. Gierachse verstanden. Die Hochachse bzw. Gierachse ist dabei eine vertikale Achse durch den Schwerpunkt des Fahrzeugs, um welche sich das Fahrzeug bei Lenkbewegungen auf einer Fahrt dreht.

Während die Spurweite zwischen dem ersten und dem zweiten Rad eine vorgegebene sich normalerweise nicht verändernde Größe des Fahrzeugs ist, sind die Gierrate und die erste und zweite Drehgeschwindigkeit Messgrößen, welche sich zeitlich ändern und beispielsweise über ein ESP-Steuergerät des Fahrzeugs ermittelt werden können.

Da die Gierrate, die erste und zweite Drehgeschwindigkeit sowie der Abstand zwischen dem ersten und dem zweiten Rad relativ einfach ermittelt werden können, kann erfindungsgemäß auch der Umfang des Rades des Fahrzeugs relativ einfach bestimmt werden. Besonders vorteilhaft ist es dabei, dass die genaue Ermittlung des Umfangs des Rades ohne äußere Hilfsmittel, wie z.B. Satelliten (GPS), ermöglicht wird, so dass die Ermittlung also ausschließlich mit im Fahrzeug meist bereits vorhandener Sensorik dynamisch erfolgt. Durch die genaue Ermittlung des Umfangs ist dann wiederum eine sehr genaue Geschwindigkeits- und Positionsbestimmung möglich.

Der Umfang U des ersten Rades wird abhängig von der Gierrate $\dot{\Psi}$, der Spurweite s zwischen dem ersten und dem zweiten Rad, einem Verhältnis $X_1$ zwischen dem Umfang des ersten Rades und dem Umfang des zweiten Rades sowie der ersten Drehgeschwindigkeit $DG_1$ des ersten Rades und der zweiten Drehgeschwindigkeit $DG_2$ des zweiten Rades aus folgender Formel (1) bei einer Kurvenfahrt des Fahrzeugs berechnet:

$$(1) \quad U = \frac{\dot{\Psi} \times s}{DG_2 \times X_1 - DG_1}.$$

Dabei liegt eine Kurvenfahrt insbesondere vor, wenn die Gierrate deutlich von 0˚/s verschieden ist und z.B. oberhalb von 15˚/s liegt.

Das Verhältnis $X_1$ zwischen dem Umfang des ersten Rades und dem Umfang des zweiten Rades lässt sich dabei jeweils zu einem Zeitpunkt ermitteln, zu welchem die über ein vorbestimmtes Zeitintervall aufintegrierte Gierrate den Wert 0˚ aufweist. Zu diesem Zeitpunkt wird dann das Verhältnis $X_1$ aus der ersten Drehgeschwindigkeit $DG_1$ und der zweiten Drehgeschwindig-

keit $DG_2$ ermittelt, indem die erste Drehgeschwindigkeit $DG_1$ und die zweite Drehgeschwindigkeit $DG_2$ zeitlich über dieses Zeitintervall aufintegriert werden, wie es durch die folgende Formel angegeben ist:

$$(2) \qquad X_1 = \frac{\int DG_1}{\int DG_2}.$$

Anders ausgedrückt wird zu irgendeinem ersten Zeitpunkt begonnen, jeweils die Gierrate, die erste Drehgeschwindigkeit und die zweite Drehgeschwindigkeit aufzuintegrieren. Wenn zu einem zweiten Zeitpunkt, welcher zeitlich nach dem erstem Zeitpunkt liegt, das zeitliche Integral der Gierrate den Wert 0˚ aufweist, wird das Verhältnis $X_1$ aus der Gleichung (2) ermittelt. Dabei ist dann sowohl die erste als auch die zweite Drehgeschwindigkeit über einem Zeitintervall, welches von dem ersten bis zu dem zweiten Zeitpunkt verläuft, aufintegriert worden.

Das Verhältnis $X_1$ zwischen dem Umfang des ersten Rades und dem Umfang des zweiten Rades lässt sich allerdings auch bei einer Geradeausfahrt des Fahrzeugs aus der ersten Drehgeschwindigkeit $DG_1$ und der zweiten Drehgeschwindigkeit $DG_2$ ermitteln, indem bei der Geradeausfahrt die erste Drehgeschwindigkeit $DG_1$ und die zweite Drehgeschwindigkeit $DG_2$ zeitlich aufintegriert werden, wie es durch die obige Formel (2) angegeben ist.

Dabei liegt eine Geradeausfahrt des Fahrzeugs vor, wenn die Gierrate nahezu bei 0˚/s liegt. Bei einer Geradeausfahrt wird erfindungsgemäß die Tatsache ausgenutzt, dass alle Räder des Fahrzeugs dieselbe Weglänge pro Zeiteinheit zurücklegen.

Vorteilhafter Weise kann abhängig von der Gierrate, dem Abstand und einer Drehgeschwindigkeit für jedes Rad des Fahrzeugs der Umfang für jedes Rad des Fahrzeugs bestimmt werden. Damit ist es beispielsweise möglich Unterschiede zwischen den Umfängen verschiedener Räder eines Fahrzeugs zu erfassen und daraus beispielsweise einen Verschleiß eines Rades oder Luftdruckschwankungen eines Rades zu erkennen.

Um bei der Berechnung des Verhältnisses $X_1$ störende Effekte, wie z.B. dynamische Veränderungen der Umfänge bei höheren Geschwindigkeiten und hohen Gierraten, zu vermeiden, kann es sinnvoll sein, die erste und die zweite Drehgeschwindigkeit nur dann zu erfassen und aufzuintegrieren, um durch die vorab angegebene Formel (2) das Verhältnis $X_1$ zu berechnen, wenn folgende Randbedingungen gegeben sind:

- der Lenkwinkel des Fahrzeugs ist klein, z.B. betragsmäßig kleiner als 0,5˚,
- die Geschwindigkeit des Fahrzeugs ist größer als 10km/h und kleiner als 50km/h,

- die Querbeschleunigung des Fahrzeugs ist klein, z.B. betragsmäßig kleiner als 1m/s/s,
- es liegt kein automatischer Eingriff, beispielsweise durch ESP, ABS, ASR, MSR usw. bei dem Fahrzeug vor, welcher die erste oder die zweite Drehgeschwindigkeit ungleichmäßig beeinflusst.

Es sei darauf hingewiesen, dass die oben für die Randbedingungen genannten Werte an den jeweils entsprechenden Fahrzeugtyp angepasst werden können.

Dabei versteht man unter einem Lenkwinkel einen Vorspurwinkel eines eingeschlagenen Rades des Fahrzeugs. Der Lenkwinkel wird meist am kurveninneren Rad gemessen und bezieht sich auf die Fahrzeugslängsmittelachse.

Indem das Verhältnis $X_1$ andauernd neu berechnet wird, kann das Verhältnis $X_1$ vorteilhafter Weise an neue Bedingungen, z.B. einen sinkenden Reifendruck, angepasst werden. Des Weiteren gilt, dass das Verhältnis X1 in der Regel umso genauer bestimmt werden kann, desto länger die Geradeausfahrt andauert oder je mehr Geradeausfahrtabschnitte kontinuierlich aufintegriert werden können.

Um gegebenenfalls auftretende Messfehler auszumitteln, wird bei einer bevorzugten Ausführungsform der Erfindung der Umfang U des ersten Rades berechnet, indem dieser Umfang über N Zeitpunkte berechnet wird, und dann diese N berechneten Umfänge gemittelt werden, wie es in der folgenden Gleichung angegebenen ist:

$$(3) \qquad U = \frac{\sum_{1}^{N} \frac{\dot{\Psi} \times s}{DG_2 \times X_1 - DG_1}}{N}.$$

Ähnlich wie bei dem Verhältnis $X_1$ kann der Umfang U in der Regel umso genauer bestimmt werden, je mehr Zeitpunkte N in die Berechnung einfließen. Auf der anderen Seite muss die Berechnung ab und an neu aufgesetzt werden, um Veränderungen, welche beispielsweise durch einen sinken Reifendruck verursacht werden, rasch zu bemerken.

Da ein Unterschied zwischen der ersten Drehgeschwindigkeit und der zweiten Drehgeschwindigkeit bei einer geringen Gierrate relativ klein ist, ist es vorteilhaft, den Umfang nur zu ermitteln, wenn die Gierrate groß, z.B. größer als 15˚/s ist.

Da die Gierrate eine zur Bestimmung des Umfangs des ersten Rades entscheidende Messgröße ist, ist es vorteilhaft, diese Gierrate möglichst korrekt zu ermitteln. Dazu kann eine Gierratenkorrekturgröße $\dot{\Psi}_{kor}$ bestimmt werden, um welche eine Gierratenmessgröße $\dot{\Psi}_{Mess}$, welche beispielsweise durch das ESP-Steuergerät des Fahrzeugs gemessen wird, korrigiert wird, um

diejenige Gierrate $\ddot{\Psi}$ zu ermitteln, mit welcher schließlich der Umfang des ersten Rades und damit die Umfänge alle Räder des Fahrzeugs genau bestimmt werden können. Diese Gierratenkorrekturgröße $\ddot{\Psi}_{kor}$ wird mit Hilfe der folgenden Formel zu N Zeitpunkten, zu welchen das Fahrzeug steht, bestimmt, wobei erfindungsgemäß die Tatsache ausgenutzt wird, dass die Gierrate beim Stillstand des Fahrzeugs den Wert 0 annimmt.

$$(4) \quad \dot{\Psi}_{kor} = \frac{\sum_{1}^{N} \dot{\Psi}_{Mess} - 0}{N}.$$

Die Gierratenkorrekturgröße kann dabei entweder bei jedem neuen Stillstand des Fahrzeugs neu bestimmt werden oder bestimmt werden, indem die Mittelwertbildung gemäß Gleichung (4) kontinuierlich fortgesetzt wird.

Ähnlich wie bei der Bestimmung des Verhältnisses $X_1$ zwischen dem Umfang des ersten und des zweiten Rades kann es für die genaue Bestimmung des Umfanges des ersten Rades vorteilhaft sein, störende Effekte bei der Bestimmung des Umfanges zu vermeiden, indem der genaue Umfang nur bestimmt wird, wenn folgende Randbedingungen erfüllt sind:

- der Lenkwinkel des Fahrzeugs ist groß, z.B. betragsmäßig größer als 3°,
- die Geschwindigkeit des Fahrzeugs ist größer als 10km/h und kleiner als 50km/h,
- die Querbeschleunigung des Fahrzeugs ist klein, z.B. betragsmäßig kleiner als 1m/s/s,
- es liegt kein automatischer Eingriff, beispielsweise durch ESP, ABS, ASR, MSR usw. bei dem Fahrzeug vor, welcher die erste oder die zweite Drehgeschwindigkeit ungleichmäßig beeinflusst.

Ähnlich wie bei den Randbedingungen zur Bestimmung des Verhältnisses $X_1$ zwischen dem Umfang des ersten und des zweiten Rades können die oben für die Randbedingungen angegebenen Werte vom Fahrzeugtyp abhängen. Diese Werte werden in aller Regel für einen bestimmten Fahrzeugtyp durch Fahrzeugtests bestimmt. Dies gilt sowohl für die Werte für die Randbedingungen zur Bestimmung des Verhältnisses $X_1$ zwischen dem Umfang des ersten und des zweiten Rades als auch für die Randbedingungen für die genaue Bestimmung des Umfanges des ersten Rades.

Wenn der Umfang U, des ersten Rades einmal genau bestimmt worden ist, kann durch diesen Umfang U, und die Drehgeschwindigkeit $DG_1$ des ersten Rades der Umfang $U_a$ eines anderen Rades des Fahrzeugs durch Ermittlung der Drehgeschwindigkeit $DG_a$ dieses anderen Rades durch folgende Formel bei einer Geradeausfahrt des Fahrzeugs ermittelt werden:

$$(5) \quad U_a = \frac{\int DG_1}{\int DG_a} \times U_1.$$

In ähnlicher Weise wie bei der vorab beschriebenen Ermittlung des Verhältnisses $X_1$ muss auch die Bestimmung des genauen Umfangs des anderen Rades nicht unbedingt bei einer Geradeausfahrt durchgeführt werden, sondern kann stattdessen zu einem Zeitpunkt durchgeführt werden, zu welchem ein zeitliches Integral der Gierrate den Wert 0° aufweist.

Anstelle der Drehgeschwindigkeit kann auch mit einer Raddrehgeschwindigkeit gearbeitet werden. Dabei wird die Raddrehgeschwindigkeit aus einem Produkt aus Drehgeschwindigkeit und Normradumfang berechnet. Bei Verwendung der Raddrehgeschwindigkeit wird anstelle der ersten Drehgeschwindigkeit mit einer ersten Raddrehgeschwindigkeit, anstelle der zweiten Drehgeschwindigkeit mit einer zweiten Raddrehgeschwindigkeit und anstelle der Drehgeschwindigkeit pro Rad mit einer Raddrehgeschwindigkeit pro Rad in den oberen Gleichungen (1) - (3) und (5) gearbeitet.

Die Verwendung der Raddrehgeschwindigkeit kann Vorteile aufweisen, wenn die Raddrehgeschwindigkeiten für die entsprechenden Räder, für welche der genaue Umfang zu bestimmen ist, bereits beispielsweise in einem ESP-Steuergerät bekannt sind. Der Normradumfang ist dabei eine Konstante und entspricht insbesondere einer Vorgabe des Radherstellers.

Während sich bei den obigen Gleichungen (2) und (4) der Normradumfang bei einer Verwendung der Raddrehgeschwindigkeiten anstelle der Drehgeschwindigkeiten herauskürzt, kürzt er sich in den Gleichungen (1) und (3) nicht heraus, so dass anstelle der Gleichung (1) dann die folgende Gleichung (6) und anstelle der Gleichung (3) dann die folgende Gleichung (7) gilt, wenn $U_N$ der Normradumfang und $V_1$ bzw. $V_2$ die Raddrehgeschwindigkeit des ersten bzw. zweiten Rades ist:

$$(6) \quad U = \frac{\dot{\Psi} \times s}{V_2 \times X_1 - V_1} \times U_N.$$

$$(7) \quad U = \frac{\sum_{1}^{N} \frac{\dot{\Psi} \times s}{V_2 \times X_1 - V_1}}{N} \times U_N.$$

Da der Normradumfang $U_N$ und die Spurweite s beispielsweise einem ESP-Steuergerät bekannt sind, kann das ESP-Steuergerät bei Kenntnis der Gierrate $\ddot{\Psi}$, der ersten $V_1$ und zweiten $V_2$ Raddrehgeschwindigkeit erfindungsgemäß den genauen Umfang U des ersten Rades und aufbauend darauf die genauen Umfänge der anderen Räder bestimmen

Im Rahmen der vorliegenden Erfindung wird auch eine Vorrichtung bereitgestellt, um den Umfang eines Rades eines Fahrzeugs mit mindestens zwei Rädern genau zu bestimmen. Dabei ermittelt die Vorrichtung die Gierrate des Fahrzeugs sowie die erste Drehgeschwindigkeit des ersten Rades und die zweite Drehgeschwindigkeit des zweiten Rades des Fahrzeugs und kennt die Spurweite zwischen dem ersten und dem zweiten Rad. Abhängig von der Gierrate sowie der ersten und zweiten Drehgeschwindigkeit und der Spurweite bestimmt die Vorrichtung dann den genauen Umfang des ersten Rades gemäß dem vorab beschriebenen Verfahren.

Die Vorteile dieser erfindungsgemäßen Vorrichtung entsprechen den Vorteilen des erfindungsgemäßen Verfahrens, welche vorab detailliert ausgeführt worden sind, weshalb auf eine Wiederholung hier verzichtet wird.

Schließlich stellt die vorliegende Erfindung ein Fahrzeug bereit, welches die vorab beschriebene erfindungsgemäße Vorrichtung umfasst.

Die Erfindung eignet sich vorzugsweise zum Einsatz in einem Kraftfahrzeug. Sie ist aber nicht auf diesen bevorzugten Anwendungsbereich beschränkt, sondern kann generell bei allen Vorrichtungen mit mindestens zwei Rädern, wie z.B. Flugzeugen oder Anhängern, eingesetzt werden.

Die vorliegende Erfindung wird nachfolgend näher unter Bezugnahme auf die beigefügte Zeichnung anhand bevorzugter Ausführungsformen erläutert.

Fig. 1 ist eine schematische Darstellung eines erfindungsgemäßen Fahrzeugs mit einer erfindungsgemäßen Vorrichtung zur Ermittlung der genauen Umfänge der Räder des Fahrzeugs.

Fig. 2 ist eine schematische Darstellung, welche ein erfindungsgemäßes Fahrzeug und einen von diesem Fahrzeug zurückzulegenden Fahrweg darstellt.

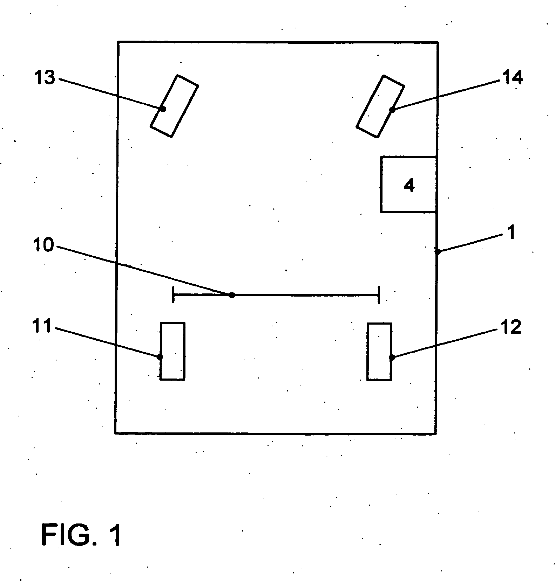

In Fig. 1 ist schematisch ein Fahrzeug 1 mit vier Rädern 11-14 und einer Vorrichtung 4 zur Bestimmung des genauen Umfangs jedes Rades 11-14 dargestellt. Mit dem Bezugszeichen 10 ist die Spurweite, d.h. der Abstand zwischen den beiden hinteren Rädern 11-12 des Fahrzeugs 1 bezeichnet. Die Vorrichtung 4, z.B. ein ESP-Steuergerät, ist in der Lage, ausgehend von den Messgrößen erste Drehgeschwindigkeit des ersten Rades 11 und zweite Drehgeschwindigkeit des zweiten Rades 12 sowie der Gierrate des Fahrzeugs die genauen Umfänge der beiden hinteren Räder 11-12 zu bestimmen, sofern der Vorrichtung 4 auch die Spurweite 10 bekannt ist.

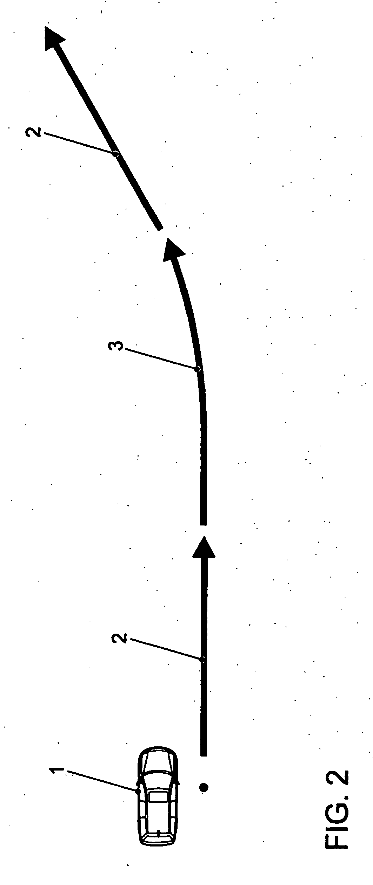

Mit Hilfe der Fig. 2 wird im Folgenden beschrieben, wie die Vorrichtung 4 auf dem in Fig. 2 dargestellten Fahrweg, welcher aus zwei geraden Teilstücken 2 und einem Kurventeilstück 3 besteht, die genauen Umfänge der beiden hinteren Räder 11-12 und schließlich auch der vorderen Räder 13, 14 des Fahrzeugs bestimmt.

Da sich das Fahrzeug 1 zu Beginn der Fahrt im Stillstand befindet, wird eine Gierratenkorrekturgröße aus der Gierratenmessgröße, d.h. der gemessenen Gierrate bestimmt, da die Gierrate bei einem stillstehenden Fahrzeug per Definition 0 betragen muss. Mit dieser Gierratenkorrekturgröße wird die Gierratenmessgröße auf dem folgenden Fahrweg korrigiert, um die Gierrate zu ermitteln, mit welcher schließlich der genaue Umfang jedes Rades des Fahrzeugs 1 bestimmt wird.

Auf dem folgenden ersten geraden Teilstück 2 wird das Verhältnis $X_1$ zwischen dem Umfang des ersten Rades und dem Umfang des zweiten Rades bestimmt, indem sowohl die erste Drehgeschwindigkeit $DG_1$ des ersten Rades als auch die zweite Drehgeschwindigkeit $DG_2$ des zweiten Rades aufintegriert werden, während das Fahrzeug 1 auf dem ersten geraden Teilstück 2 fährt. Indem die aufintegrierten ersten Drehgeschwindigkeiten durch die aufintegrierten zweiten Drehgeschwindigkeiten geteilt werden, wird das Verhältnis $X_1$ zwischen dem Umfang des ersten Rades und dem Umfang des zweiten Rades bestimmt, wie es auch vorab mit der Gleichung (2) beschrieben ist.

Auf dem dem ersten geraden Teilstück 2 folgenden Kurventeilstück 3 wird der genaue Umfang U des ersten Rades 11 abhängig von der ersten Drehgeschwindigkeit $DG_1$ des ersten Rades 11, der zweiten Drehgeschwindigkeit $DG_2$ des zweiten Rades 12 und der Gierrate $\dot{\Psi}$ mit Hilfe der Spurweite 10 bzw. 5 und des vorab berechneten Verhältnisses $X_1$ zwischen dem Umfang des ersten Rades 11 und dem Umfang des zweiten Rades 12 zu N verschiedenen Zeitpunkten bestimmt und schließlich der genaue Umfang U des ersten Rades 11 an Hand der oben beschriebenen Gleichung (1) oder (3) ermittelt.

Auf dem dem Kurventeilstück 3 folgenden geraden Teilstück 2 werden dann die Umfänge der restlichen Räder 12-14 ausgehend von dem nunmehr bekannten genauen Umfang des ersten Rades 11 und der Drehgeschwindigkeiten der vier Räder 11-14 durch die oben beschriebene Gleichung (5) ermittelt. Dabei werden, während das Fahrzeug 1 auf diesem geraden Teilstück 2 fährt, die Drehgeschwindigkeiten der vier Räder 11-14 über das ESP-Steuergerät ermittelt und aufintegriert. Um den genauen Umfang eines bestimmten Rades zu ermitteln, werden die aufintegrierten ersten Drehgeschwindigkeiten durch die aufintegrierten Drehgeschwindigkeiten des bestimmten Rades geteilt und das Ergebnis mit dem vorab ermittelten genauen Umfang des ersten Rades multipliziert, woraus sich der genaue Umfang des bestimmten Rades ergibt, wie dies oben in Gleichung (5) angegeben ist.

Die für die genaue Ermittlung der Umfänge aller Räder benötigten Fahrwegteilstücke, d.h. die geraden Teilstücke und das mindestens eine Kurventeilstück, können natürlich auch einem normalen Fahrweg eines Fahrzeugs, bei welchem diese Ermittlung durchgeführt wird, entnommen werden.

Durch die Erfindung lässt sich der Abrollumfang jedes Rades eines Fahrzeugs genau bestimmen. Dadurch kann beispielsweise der von dem Fahrzeug zurückgelegte Weg sehr genau bestimmt werden, was z.B. für Fahrassistenzsysteme (Navigationssystem, Einparkhilfe) von großem Vorteil ist. Des Weiteren lässt sich dadurch beispielsweise vor einem sinkenden Luftdruck oder einem Verschleiß eines Rades warnen, wenn der für dieses Rad bestimmte Umfang unter einen entsprechend vorgegebenen Wert abfällt.

**Bezugszeichenliste**

1 Fahrzeug
2 Geradeausfahrt
3 Kurvenfahrt
4 Bordcomputer
11 Rad, hinten links
12 Rad, hinten rechts
13 Rad, vorn links
14 Rad, vorn rechts

**Patentansprüche**

1. Verfahren zur Umfangsermittlung eines ersten Rades (11) eines Fahrzeuges (1) mit zwei durch die Spurweite (10) des Fahrzeugs (1) beabstandeten Rädern (11, 12) aus der Drehgeschwindigkeit DG1 des ersten Rades (11), **dadurch gekennzeichnet, dass** der Umfang U des ersten Rades (11) zusätzlich abhängig von der Drehgeschwindigkeit des zweiten Rades (11), von der Gierrate $\ddot{\Psi}$ ,des Fahrzeugs (1), der Spurweite S und dem Verhältnis $X_1$ zwischen dem Umfang des ersten Rades (11) und dem Umfang des zweiten Rades (12) mit der Formel

$$U = \frac{\dot{\Psi} \times S}{DG_2 \times X_1 - DG_1}$$

berechnet wird,
wobei das Verhältnis $X_1$ entweder durch folgende Formel aus einem ersten zeitlichen Integral der ersten Drehgeschwindigkeit $DG_1$ und einem zweiten zeitlichen Integral der zweiten Drehgeschwindigkeit $DG_2$ zu einem Zeitpunkt ermittelt wird, zu welchem ein drittes zeitliches Integral der Gierrate den Wert 0˚ ergibt, wobei die drei Integrale über dasselbe Zeitintervall gebildet werden :

$$X_1 = \frac{\int DG_1}{\int DG_2}.$$

2. Verfahren nach Anspruch 1, **dadurch gekennzeichnet, dass** das Verhältnis $X_1$ bei einer Geradeausfahrt durch die folgende Formel aus dem ersten zeitlichen Integral der ersten Drehgeschwindigkeit $DG_1$ und dem zweiten zeitlichen Integral der zweiten Drehgeschwindigkeit $DG_2$ ermittelt wird:

$$X_1 = \frac{\int DG_1}{\int DG_2}.$$

3. Verfahren nach Anspruch 1 oder 2, **dadurch gekennzeichnet, dass** der Umfang durch eine Mittelwertbildung über N Zeitpunkte wie folgt berechnet wird:

$$U = \frac{\sum_1^N \dfrac{\dot{\Psi} \times s}{DG_2 \times X_1 - DG_1}}{N}$$

4. Verfahren nach einem der vohergehanden Ansprüche, **dadurch gekennzeichnet, dass** der Umfang nur bestimmt wird, wenn die Gierrate größer als 15˚/s ist.

5. Verfahren nach einem der vorhergehenden Ansprüche, **dadurch gekennzeichnet, dass** das das Verhältnis $X_1$ nur bestimmt wird, wenn folgende Bedingungen erfüllt sind:

   - ein Lenkwinkel des Fahrzeugs ist betragsmäßig kleiner als 0,5˚,
   - eine Geschwindigkeit des Fahrzeugs ist größer als 10km/h und kleiner als 50km/h,
   - eine Querbeschleunigung des Fahrzeugs ist betragsmäßig kleiner als 1m/s/s,
   - eine betragsmäßige Beschleunigung des Fahrzeugs ist kleiner als 1m/s$^2$,
   - kein automatischer Eingriff des Fahrzeugs, welcher die erste oder zweite Drehgeschwindigkeit einseitig beeinflusst.

6. Verfahren nach einem der vorhergehenden Ansprüche, **dadurch gekennzeichnet, dass** das Verhältnis $X_1$ kontinuierlich neu berechnet wird.

7. Verfahren nach einem der vorhergehenden Ansprüche, **dadurch gekennzeichnet, dass** die Gierrate abhängig von einer Gierratenmessgröße $\ddot{\Psi}_{Mess}$, welche mittels einer Gierratenkorrekturgröße $\dot{\Psi}_{kor}$ korrigiert wird, bestimmt wird, wobei die Gierraten-korrekturgröße $\dot{\Psi}_{kor}$ abhängig von der Gierraten-messgröße $\dot{\Psi}_{Mess}$ beim Stillstand des Fahrzeugs (1) über folgende Formel berechnet wird, wobei N eine Anzahl von Zeitpunkten ist, zu denen die Gierraten-messgröße $\dot{\Psi}_{Mess}$ ermittelt wird:

$$\dot{\Psi}_{kor} = \frac{\sum_1^N \dot{\Psi}_{Mess} - 0}{N}.$$

8. Verfahren nach einem der vorhergehenden Ansprüche, **dadurch gekennzeichnet, dass** der Umfang U nur bestimmt wird, wenn folgende Bedingungen erfüllt sind:

     - ein Lenkwinkel des Fahrzeugs (1) ist betragsmäßig größer als 3°,
     - eine Geschwindigkeit des Fahrzeugs (1) ist größer als 10km/h und kleiner als 50km/h,
     - eine Querbeschleunigung des Fahrzeugs (1) ist betragsmäßig kleiner als $1m/s^2$,
     - kein automatischer Eingriff des Fahrzeugs (1), welcher die erste oder zweite Drehgeschwindigkeit einseitig beeinflusst.

9. Verfahren nach einem der vorhergehenden Ansprüche, **dadurch gekennzeichnet, dass** ein Umfang $U_a$ eines anderen Rades (12-14) als des ersten Rades (11) des Fahrzeugs (1) abhängig von einer an-deren Drehgeschwindigkeit $DG_a$ des anderen Ra-des (12-14), der ersten Drehgeschwindigkeit $DG_1$ und des Umfangs $U_1$ des ersten Rades durch folgende Formel berechnet wird, wobei die andere Drehgeschwindigkeit $DG_a$ und die erste Drehge-schwindigkeit $DG_1$ bei einer Geradeausfahrt des Fahrzeugs (1) ermittelt wird:

$$U_a = \frac{\int DG_1}{\int DG_a} \times U_1.$$

10. Verfahren nach einem der vorhergehenden Ansprüche, **dadurch gekennzeichnet, dass** anstelle der Drehgeschwindigkeit mit einer Raddrehgeschwindigkeit gearbeitet wird, wobei sich die Raddrehgeschwindigkeit aus einem Produkt aus der Drehge-schwindigkeit und eines Normradumfangs berech-net.

11. Vorrichtung zur Umfangsermittlung eines ersten Rades (11) eines Fahrzeuges (1) mit zwei durch die Spurweite (10) des Fahrzeugs (1) beabstandeten Rädern (11, 12), wobei die Vorrichtung (4) derart ausgestaltet ist, dass die Vorrichtung (4) den Umfang des ersten Rades (11) abängig von der Dreh-geschwindigkeit $DG_1$ des ersten Rades (11), von der Drehgeschwindigkeit des zweiten Rades (11), von der Gierrate $\dot{\Psi}$ des Fahrzeugs (1), der Spurweite S und dem Verhältnis $X_1$ zwischen dem Umfang des ersten Rades (11) und dem Umfang des zweiten Rades (12) mit der Formel

$$U = \frac{\dot{\Psi} \times S}{DG_2 \times X_1 - DG_1}$$

berechnet,
wobei die Vorrichtung (4) das Verhältnis $X_1$ entwe-der durch folgende Formel aus einem ersten zeitlichen Integral der ersten Drehgeschwindigkeit $DG_1$ und einem zweiten zeitlichen Integral der zweiten Drehgeschwindigkeit $DG_2$ zu einem Zeitpunkt ermit-telt, zu welchem die Vorrichtung (4) ein drittes zeitliches Integral der Gierrate mit dem Wert 0° berechnet, wobei die Vorrichtung die drei Integrale über dasselbe Zeitintervall bildet:

$$X_1 = \frac{\int DG_1}{\int DG_2}.$$

12. Vorrichtung nach Anspruch 11, wobei die Vorrichtung (4) das Verhältnis $X_1$ bei einer Geradeausfahrt durch die folgende Formel aus dem ersten zeitlichen Integral der ersten Drehgeschwin-digkeit $DG_1$ und dem zweiten zeitlichen Integral der zweiten Drehgeschwindigkeit $DG_2$ ermittelt:

$$X_1 = \frac{\int DG_1}{\int DG_2}.$$

13. Vorrichtung nach Anspruch 11 oder 12, **dadurch gekennzeichnet, dass** die Vorrichtung (4) zur Durchführung des Verfahrens nach einem der Ansprüche 3 bis 10 ausgestaltet ist.

14. Fahrzeug mit einer Vorrichtung nach einem der Ansprüche 11 bis 13.

**Claims**

1. Method for determining the circumference of a first wheel (11) of a vehicle (1) having two wheels (11, 12) which are spaced apart by the wheel gauge (10) of the vehicle (1) from the rotational speed DG1 of the first wheel (11), **characterized in that** the circumference U of the first wheel (11) is additionally calculated as a function of the rotational speed of the second wheel (11), of the yaw rate $\ddot{\Psi}$ of the vehicle (1), of the wheel gauge S and the ratio $X_1$ between the circumference of the first wheel (11) and the circumference of the second wheel (12) with the formula

$$U = \frac{\ddot{\Psi} \times S}{DG_2 \times X_1 - DG_1}$$

therein the ratio $X_1$ is determined either by means of the following formula from a first time integral of the first rotational speed $DG_1$ and a second time integral of the second rotational speed $DG_2$ at a time at which a third time integral of the yaw rate yields the value 0°, wherein the three integrals are formed over the same time interval:

$$X_1 = \frac{\int DG_1}{\int DG_2}.$$

2. Method according to Claim 1, **characterized in that** the ratio $X_1$ in the case of straight-ahead travel is determined by means of the following formula from the first time integral of the first rotational speed $DG_1$ and the second time integral of the second rotational speed $DG_2$:

$$X_1 = \frac{\int DG_1}{\int DG_2}.$$

3. Method according to Claim 1 or 2, **characterized in that** the circumference is calculated by forming mean values over N times as follows:

$$U = \frac{\sum_{1}^{N} \frac{\ddot{\Psi} \times s}{DG_2 \times X_1 - DG_1}}{N}.$$

4. Method according to one of the preceding claims, **characterized in that** the circumference is determined only if the yaw rate is higher than 15°/s.

5. Method according to one of the preceding claims, **characterized in that** the ratio $X_1$ is determined only if the following conditions are met:

 - a steering angle of the vehicle is smaller than 0.5° in terms of absolute value,
 - a velocity of the vehicle is higher than 10 km/h and lower than 50 km/h,
 - a lateral acceleration of the vehicle is lower than 1 m/s/s in terms of absolute value,
 - an acceleration of the vehicle is lower than 1 m/s$^2$ in terms of absolute value,
 - there is no automatic intervention in the vehicle which influences the first or second rotational speed on one side.

6. Method according to one of the preceding claims, **characterized in that** the ratio $X_1$ is continuously recalculated.

7. Method according to one of the preceding claims, **characterized in that** the yaw rate is determined as a function of a yaw rate measurement variable $\ddot{\Psi}_{Mess}$ which is corrected by means of a yaw rate correction variable $\ddot{\Psi}_{kor}$, wherein the yaw rate correction variable $\ddot{\Psi}_{kor}$ is calculated as a function of the yaw rate measurement variable $\ddot{\Psi}_{Mese}$ when the vehicle (1) is stationary by means of the following formula where N is a number of points in time at which the yaw rate measurement variable $\ddot{\Psi}_{Mess}$ is determined:

$$\dot{\Psi}_{kor} = \frac{\sum_{1}^{N} \dot{\Psi}_{Mess} - 0}{N}.$$

8. Method according to one of the preceding claims, **characterized in that** the circumference U is determined only if the following conditions are met:

 - a steering angle of the vehicle (1) is greater than 3° in terms of absolute value,
 - a velocity of the vehicle (1) is higher than 10 km/h and lower than 50 km/h,
 - a lateral acceleration of the vehicle (1) is lower than 1 m/s$^2$ in terms of absolute value,
 - there is no automatic intervention in the vehicle (1) which influences the first or second rotational speed on one side.

9. Method according to one of the preceding claims, **characterized in that** a circumference $U_a$ of a wheel

(12-14) other than the first wheel (11) of the vehicle (1) is calculated as a function of another rotational speed $DG_a$ of the other wheel (12-14), the first rotational speed $DG_1$ and the circumference $U_1$ of the first wheel by means of the following formula, wherein the other rotational speed $DG_a$ and the first rotational speed $DG_1$ are determined when the vehicle (1) is travelling straight ahead:

$$U_a = \frac{\int DG_1}{\int DG_a} \times U_1 .$$

10. Method according to one of the preceding claims, **characterized in that** instead of the rotational speed the system operates with a wheel speed, wherein the wheel speed is calculated from a product of the rotational speed and a standard wheel circumference.

11. Device for determining the circumference of a first wheel (11) of a vehicle (1) having two wheels (11, 12) which are spaced apart by the wheel gauge (10) of the vehicle (1), wherein the device (4) is configured in such a way that the device (4) calculates the circumference of the first wheel (11) as a function of the rotational speed $DG_1$ of the first wheel (11), the rotational speed of the second wheel (11), the yaw rate $\ddot{\Psi}$ of the vehicle (1), the wheel gauge S and the ratio $X_1$ between the circumference of the first wheel (11) and the circumference of the second wheel (12) with the formula

$$U = \frac{\ddot{\Psi} \times S}{DG_2 \times X_1 - DG_1}$$

wherein the device (4) determines the ratio $X_1$ either by means of the following formula from a first time integral of the first rotational speed $DG_1$ and a second time integral of the second rotational speed $DG_2$ at a time at which the device (4) calculates a third time integral of the yaw rate with the value 0˚, wherein the device forms the three integrals over the same time interval:

$$X_1 = \frac{\int DG_1}{\int DG_2} .$$

12. Device according to Claim 11, wherein the device (4) determines the ratio $X_1$ when the vehicle is travelling straight ahead by means of the following formula from the first time integral of the first rotational speed $DG_1$ and the second time integral of the second rotational speed $DG_2$:

$$X_1 = \frac{\int DG_1}{\int DG_2} .$$

13. Device according to Claim 11 or 12, **characterized in that** the device (4) is configured to carry out the method according to one of Claims 3 to 10.

14. Vehicle having a device according to one of Claims 11 to 13.

## Revendications

1. Procédé pour déterminer la circonférence d'une première roue (11) d'un véhicule (1) comprenant deux roues (11, 12) espacées de l'écartement des roues (10) du véhicule (1) à partir de la vitesse de rotation $DG_1$ de la première roue (11), **caractérisé en ce que** la circonférence U de la première roue (11) est en plus calculée en fonction de la vitesse de rotation de la deuxième roue (11), du taux de lacet $\ddot{\Psi}$ du véhicule (1), de l'écartement des roues S et du rapport $X_1$ entre la circonférence de la première roue (11) et la circonférence de la deuxième roue (12) avec la formule

$$U = \frac{\ddot{\Psi} \times S}{DG_2 \times X_1 - DG_1}$$

le rapport $X_1$ étant déterminé soit par la formule suivante à partir d'une première intégrale dans le temps de la première vitesse de rotation $DG_1$ et d'une deuxième intégrale dans le temps de la deuxième vitesse de rotation $DG_2$ à un instant où une troisième intégrale dans le temps du taux de lacet donne la valeur 0˚, les trois intégrales étant calculées sur le même intervalle de temps :

$$x_1 = \frac{\int DG_1}{\int DG_2}$$

2. Procédé selon la revendication 1, **caractérisé en ce que** le rapport $X_1$ lors d'un déplacement en ligne droite est déterminé par la formule suivante à partir de la première intégrale dans le temps de la première vitesse de rotation $DG_1$ et de la deuxième intégrale dans le temps de la deuxième vitesse de rotation $DG_2$ :

$$x_1 = \frac{\int DG_1}{\int DG_2}$$

3. Procédé selon la revendication 1 ou 2, **caractérisé en ce que** la circonférence est calculée de la manière suivante en calculant la valeur moyenne sur N instants :

$$U = \frac{\sum_1^N \frac{\dot{\Psi} \times s}{DG_2 \times X_1 - DG_1}}{N}$$

4. Procédé selon l'une des revendications précédentes, **caractérise en ce que** la circonférence n'est déterminée que lorsque le taux de lacet est supérieur à 15°/s.

5. Procédé selon l'une des revendications précédentes, **caractérisé en ce que** le rapport $X_1$ n'est déterminé que lorsque les conditions suivantes sont remplies :

   - la valeur d'un angle de direction du véhicule est inférieure à 0,5°,
   - une vitesse du véhicule est supérieure à 10 km/h et inférieure à 50 km/h,
   - la valeur d'une accélération transversale du véhicule est inférieure à 1 m/s/s,
   - la valeur d'une accélération du véhicule est inférieure à 1 m/s$^2$,
   - aucune intervention automatique du véhicule qui influence unilatéralement la première ou la deuxième vitesse de rotation.

6. Procédé selon l'une des revendications précédentes, **caractérisé en ce que** le rapport $X_1$ est continuellement recalculé.

7. Procédé selon l'une des revendications précédentes, **caractérisé en ce que** le taux de lacet est déterminé en fonction d'un grandeur mesurée du taux de lacet $\dot{\Psi}_{Mess}$ qui est corrigée au moyen d'une grandeur de correction du taux de lacet $\dot{\Psi}_{kor}$, la grandeur de correction du taux de lacet $\dot{\Psi}_{kor}$ étant calculée par le biais de la formule suivante en fonction de la grandeur mesurée du taux de lacet $\dot{\Psi}_{Mess}$ à l'arrêt du véhicule (1), N désignant un nombre d'instants auxquels est déterminée la grandeur mesurée du taux de lacet $\dot{\Psi}_{Mess}$ :

$$\dot{\Psi}_{kor} = \frac{\sum_1^N \dot{\Psi}_{Mess} - 0}{N}.$$

8. Procédé selon l'une des revendications précédentes, **caractérisé en ce que** la circonférence U n'est déterminée que lorsque les conditions suivantes sont remplies :

   - la valeur d'un angle de direction du véhicule (1) est supérieure à 3°,
   - une vitesse du véhicule (1) est supérieure à 10 km/h et inférieure à 50 km/h,
   - la valeur d'une accélération transversale du véhicule (1) est inférieure à 1 m/s$^2$,
   - aucune intervention automatique du véhicule (1) qui influence unilatéralement la première ou la deuxième vitesse de rotation.

9. Procédé selon l'une des revendications précédentes, **caractérisé en ce qu'**une circonférence $U_a$ d'une autre roue (12 - 14) que la première roue (11) du véhicule (1) est calculée en fonction d'une autre vitesse de rotation $DG_a$ de l'autre roue (12 - 14), de la première vitesse de rotation $DG_1$ et de la circonférence $U_1$ de la première roue par la formule suivante, l'autre vitesse de rotation $DG_a$ et la première vitesse de rotation $DG_1$ étant déterminées lors d'un déplacement du véhicule (1) en ligne droite :

$$U_a = \frac{\int DG_1}{\int DG_a} \times U_1.$$

10. Procédé selon l'une des revendications précédentes, **caractérisé en ce qu'**une vitesse de rotation de roue est utilisée à la place de la vitesse de rotation, la vitesse de rotation de roue étant calculée à partir d'un produit de la vitesse de rotation par une circonférence de roue normalisée.

11. Dispositif pour déterminer la circonférence d'une première roue (11) d'un véhicule (1) comprenant deux roues (11, 12) espacées de l'écartement des roues (10) du véhicule (1), le dispositif (4) étant configuré de telle sorte que le dispositif (4) calcule la circonférence de la première roue (11) en fonction de la vitesse de rotation $DG_1$ de la première roue (11), de la vitesse de rotation de la deuxième roue (11), du taux de lacet $\dot{\Psi}$ du véhicule (1), de l'écartement des roues S et du rapport $X_1$ entre la circonférence de la première roue (11) et la circonférence de la deuxième roue (12) avec la formule

$$U = \frac{\dot{\Psi} \times S}{DG_2 \times X_1 - DG_1}$$

le dispositif (4) déterminant le rapport $X_1$ soit par la formule suivante à partir d'une première intégrale dans le temps de la première vitesse de rotation $DG_1$

et d'une deuxième intégrale dans le temps de la deuxième vitesse de rotation $DG_2$ à un instant auquel le dispositif (4) calcule une troisième intégrale dans le temps du taux de lacet avec la valeur 0°, le dispositif calculant les trois intégrales sur le même intervalle de temps :

$$X_1 = \frac{\int DG_1}{\int DG_2}$$

12. Dispositif selon la revendication 11, le dispositif (4) déterminant le rapport $X_1$ lors d'un déplacement en ligne droite par la formule suivante à partir de la première intégrale dans le temps de la première vitesse de rotation $DG_1$ et de la deuxième intégrale dans le temps de la deuxième vitesse de rotation $DG_2$ :

$$X_1 = \frac{\int DG_1}{\int DG_2}$$

13. Dispositif selon la revendication 11 ou 12, **caractérisé en ce que** le dispositif (4) est configuré pour mettre en oeuvre le procédé selon l'une des revendications 3 à 10.

14. Véhicule équipé d'un dispositif selon l'une des revendications 11 à 13.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10306498